# EUROPÄISCHE PATENTANMELDUNG

(11) **EP 1 533 093 A1**
(43) Veröffentlichungstag der Anmeldung: **25.05.2005**
(21) Anmeldenummer: 03026478.2
(22) Anmeldetag: 20.11.2003
(51) Int. Cl.: B29C 43/00, B29C 43/58, F16D 69/00

(54) **Verfahren zum Härten eines Reibbelages**

(71) Anmelder: TMD Friction Europe GmbH, 51381 Leverkusen (DE)
(72) Erfinder: Westerhoff, Karsten, 45888 Gelsenkirchen (DE); Herrmann, Helmut, 51731 Leverkusen (DE); Brecht, Jörg, Dr., 51519 Odenthal (DE)
(74) Vertreter: Schmidt, Frank-Michael, Dr.-Ing.

(57) **Zusammenfassung**

Die Erfindung betrifft ein Verfahren zum Härten eines organisch gebundenen Reibbelags. Das erfindungsgemäße Verfahren zum Härten eines organisch gebundenen Reibbelages erfolgt mit Hilfe einer Vorrichtung, die eine Auflage für den Reibbelag, eine Druckplatte und eine Heizeinrichtung zum Beheizen der Auflage und/oder der Druckplatte aufweist. Der Reibbelag wird zwischen der Auflage und der Druckplatte eingebracht und die Auflage und die Druckplatte werden derart aufeinander zubewegt, daß der Reibbelag dazwischen eingespannt und mit einer vorgegebenen Kraft oder mit einer vorgegebenen Geschwindigkeit komprimiert wird. Bei dem Komprimieren wird eine Kompressionsgeschwindigkeit (V_{K}) der Druckplatte und/oder der Auflage gemessen. Aus der gemessenen Kompressionsgeschwindigkeit (V_{K}) wird ein Einsetzen des Fließens des organischen Bindemittels erfaßt. Der Reibbelag wird in Abhängigkeit von dem Erfassen des Einsetzens des Fließens komprimiert. Das bedeutet, daß nach dem Erfassen des Einsetzens des Fließens z.B. eine Kompressionskraft oder Kompressionsgeschwindigkeit neu vorgegeben werden.

## Beschreibung

Die Erfindung betrifft ein Verfahren zum Härten eines organisch gebundenen Reibbelags.

Bei der Herstellung von Reibbelägen, wie sie für Bremsen oder Kupplungen von Fahrzeugen verwendet werden, wird häufig eine formbare und härtbare organisch gebundene Reibbelagmasse verwendet. Organisch gebundene Reibbelagmassen enthalten zumeist Harze oder einen Kautschuk als organisches Bindemittel. Die Reibbelagmasse wird üblicherweise in einem Preßvorgang geformt und verdichtet. Bei diesem Vorgang kann die Reibbelagmasse mit einer Belagträgerplatte verbunden werden, d.h. auf die Belagträgerplatte aufgepreßt werden.

In einem sich anschließenden Härteprozeß wird die Reibbelagmasse üblicherweise bei gleichzeitigem Zusammendrücken erwärmt, wobei das im Reibbelag enthaltene organische Bindemittel vorübergehend in einen fließfähigen Zustand gebracht wird. Dieses Fließen des organischen Bindemittels und die damit einhergehende Veränderung der Belagstruktur sind wesentliche und notwendige Vorgänge beim Härten eines Reibbelages.

Nach dem Härtevorgang liegt ein thermisch und mechanisch stabiler Reibbelag vor. Der fertige Reibbelag hat den gestellten Anforderungen bzgl. Reibwirkung, Kompressibilität, Haltbarkeit und andere Eigenschaften zu genügen.

Die bisher bekannten Härteprozesse für Reibbeläge laufen mit festgelegten Härteparametern, wie z.B. Temperatur, Kompressionsdruck bzw. Kompressionskraft und Kompressionsweg, ab, die empirisch ermittelt oder berechnet wurden. Beispielsweise wird ein Reibbelag zwischen zwei Platten eingespannt und für einen bestimmten Zeitraum mit einer bestimmten Kraft oder gemäß einer Kraftrampe und bei gleichzeitiger Erwärmung verdichtet. Bisher werden Prozeß-Parameter des Härtens eingestellt und dann unverändert für eine große Anzahl zu fertigender Reibbeläge beibehalten, unabhängig von den unterschiedlichen (schwankenden oder streuenden) Eigenschaften jedes einzelnen Reibbelages. Derartige Härteprozesse können auch als "passive" Prozesse bezeichnet werden, da sie von der Annahme ausgehen, daß die zu härtenden Beläge etwa gleiche Ausgangseigenschaften aufweisen und sich auch während des Härtens etwa gleich verhalten, und da sie unabhängig von den konkreten Eigenschaften der einzelnen Reibbeläge ablaufen.

Jedoch ist diese vorausgesetzte Gleichartigkeit nicht in ausreichendem Maße gegeben oder zu gewährleisten. Geringe Abweichungen der Eigenschaften der Reibbelag-Rohlinge bzw. -Preßlinge sind unvermeidbar, insbesondere dann, wenn der meist vorgeschaltete Preßvorgang aus verfahrensökonomischen Gründen so kurz wie möglich sein soll. Die Prozeßparameter des Härtevorgangs können jedoch nur auf die erwarteten Durchschnittseigenschaften der Reibbeläge abgestimmt werden. Daraus resultieren Reibbeläge, die in ihren Eigenschaften variieren und teilweise den Anforderungen nicht genügen.

Es ist daher Aufgabe der Erfindung, den Härtevorgang derart zu verbessern, daß eine gleichmäßige und hohe Qualität der aus dem Härtevorgang hervorgehenden Reibbeläge erreicht wird.

Die Aufgabe wird erfindungsgemäß durch ein Verfahren mit den Merkmalen des Patentanspruchs 1 gelöst.

Das erfindungsgemäße Verfahren zum Härten eines organisch gebundenen (z.B. harz- oder kautschukhaltigen) Reibbelages erfolgt mit Hilfe einer Vorrichtung, die eine Auflage für den Reibbelag, eine Druckplatte und eine Heizeinrichtung zum Beheizen der Auflage und/oder der Druckplatte aufweist. Die Auflage kann z.B. eine ebene Platte oder auch ein Auflagegerüst für eine Trägerplatte sein. Die Druckplatte hat vorzugsweise eine der Oberfläche des Reibbelags angepaßte Oberfläche. Der Reibbelag wird zwischen der Auflage und der Druckplatte eingebracht und die Auflage und die Druckplatte werden derart aufeinander zubewegt, daß der Reibbelag dazwischen eingespannt und mit einer vorgegebenen Kraft oder mit einer vorgegebenen Geschwindigkeit komprimiert wird. Das bedeutet, daß entweder die Kraft (bzw. der Druck) oder die Geschwindigkeit vorgegeben werden, mit der die Druckplatte auf die Auflage zubewegt wird, wobei auch abwechselnd während des Komprimierens Kraft und Geschwindigkeit vorgegeben werden können. Bei dem Komprimieren wird eine Kompressionsgeschwindigkeit (V_{K}) bzw. eine Kompressionskraft (P_{K}) der Druckplatte und/oder der Auflage gemessen. Das heißt, es werden die Kraft bzw. die Geschwindigkeit bestimmt, mit der die Druckplatte auf die Auflage zubewegt wird. Dabei wird bei Vorgabe der Kraft zumindest die Geschwindigkeit und bei der Vorgabe der Geschwindigkeit zumindest die Kraft bestimmt bzw. gemessen. Aus der gemessenen Kompressionsgeschwindigkeit (V_{K}) oder der gemessenen Kompressionskraft (P_{K}) wird ein Einsetzen des Fließens des organischen Bindemittels erfaßt. Der Reibbelag wird in Abhängigkeit von dem Erfassen des Einsetzens des Fließens komprimiert. Das bedeutet, daß die Vorgabe von Kraft oder Geschwindigkeit geändert wird, sobald das Fließen erfaßt worden ist, beispielsweise eine zunächst oder zu Beginn vorgegebene Kraft oder Geschwindigkeit nach dem Erfassen des Fließens nicht mehr vorgegeben wird oder nach dem Erfassen des Einsetzens des Fließens eine Kraft oder Geschwindigkeit vorgegeben oder neu vorgegeben wird.

Das erfindungsgemäße Verfahren verbessert den Härtevorgang, da eine verbesserte, insbesondere eine an den konkreten Reibbelag angepaßte Steuerung möglich ist. Weil das Einsetzen des Fließens des organischen Bindemittels in dem Reibbelag erfaßt wird und die (weitere) Kompression des Reibbelages in Abhängigkeit davon erfolgt, findet ein reibbelagspezifischer Kompressions- und Härtevorgang statt. Beläge mit unterschiedlichen Ausgangseigenschaften, welche sich in unterschiedlichem Kompressionsverhalten und unterschiedlichem Einsetzen des Fließens des organischen Bindemittels äußern, werden auch unterschiedlich komprimiert. Es findet eine Rückkopplung zwischen dem Reibbelagverhalten und dem Härte- bzw. Kompressionsvorgang statt. Man kann das erfindungsgemäße Verfahren deshalb als "aktives" Härteverfahren bezeichnen (im Unterschied zu dem o.g. "passiven" Verfahren).

Das Einsetzen des Fließens des organischen Bindemittels kann erfindungsgemäß aus der gemessenen Kompressionsgeschwindigkeit (V_{K}) oder der gemessenen Kompressionskraft (P_{K}) ermittelt werden, sofern die jeweils andere Größe vorgegeben wird.

Vorzugsweise wird während des Einspannens des Reibbelages und der anfänglichen Kompression vor dem Einsetzen des Fließens die Kompressionskraft vorgegeben und geregelt. Wird der Belag zwischen der Auflage und der Druckplatte mit einer vorgegebenen Kompressionskraft eingespannt und komprimiert, erfolgt die Relativbewegung der Druckplatte und der Auflage mit sich zeitlich ändernder Geschwindigkeit. Die Geschwindigkeit kann dabei zeitweise abnehmen oder zunehmen.

Sobald der Wärmeeintrag von der beheizten Druckplatte und/oder der beheizten Auflage in das Reibbelagmaterial bei dem eingestellten Druck zu einem Fließen des organischen Bindemittels führt, kommt es zu einer signifikanten Änderung der gemessenen Kompressionsgeschwindigkeit und/oder des Anstiegs der Kompressionsgeschwindigkeit. Aus dieser Änderung kann ein Einsetzen des Fließens des organischen Bindemittels bestimmt werden. Beispielsweise läßt sich bei Beaufschlagung der Anordnung mit einer konstanten Kompressionskraft das Einsetzen des Fließens daran erkennen, daß die Kompressionsgeschwindigkeit (V_{K}), welche zuvor veränderlich war (z.B. nach anfänglicher Zunahme steil abnahm), sich mit dem Einsetzen des Fließens nur noch sehr wenig ändert (d.h. im wesentlichen konstant bleibt). Häufig ist die dann erreichte, relativ konstante Kompressionsgeschwindigkeit geringerer als die zuvor gemessene Kompressionsgeschwindigkeit.

Ein Einsetzen des Fließens des organischen Bindemittels könnte jedoch auch aus einer gemessenen Änderung der Kompressionskraft (P_{K}) erfaßt werden, sofern die Anordnung mit einer vorgegebenen Kompressionsgeschwindigkeit (oder Weg-Zeit-Steuerung) angesteuert wird.

Die gemessenen Werte der Kompressionsgeschwindigkeit (V_{K}) und der Kompressionskraft (P_{K}) werden vorzugsweise zumindest zeitweise gespeichert. Durch einen Vergleich des zuletzt gemessenen Kompressionsgeschwindigkeitswertes mit vorhergehenden Kompressionsgeschwindigkeitswerten ist dann eine charakteristische Änderung des Verlaufs der gemessenen Werte (z.B. Anstieg) und somit des Reibbelagverhaltens erkennbar.

Die Auflage und die Druckplatte können eine beliebige Gestalt und Form aufweisen. Es können Profilierungen oder Ausnehmungen darin vorgesehen sein. Eine flächige und ebene oder mehrteilige Ausbildung ist ebenfalls möglich. Sofern der Reibbelag bereits in einem Pressvorgang geformt und auf eine Belagträgerplatte aufgepreßt wurde, können in der Auflage oder der Druckplatte entsprechende Aufnahmen oder Vertiefungen für die Belagträgerplatte bzw. die Reibbelagmasse vorgesehen sein. Die Anordnung von Auflage und Druckplatte ist ebenfalls beliebig. Es können z.B. Auflage und Druckplatte vertikal übereinander oder horizontal nebeneinander angeordnet sein.

Die Kompressionsgeschwindigkeit (V_{K}) ist diejenige Geschwindigkeit, mit der sich die Auflage und die Druckplatte aufeinander zubewegen, d.h. die Relativgeschwindigkeit von Auflage und Druckplatte. Die Erfassung der Kompressionsgeschwindigkeit kann in beliebiger Weise erfolgen. Zum Beispiel kann eine übliche Hydraulikregelung neben einem Kompressionskraftmeßwert über ein internes Wegmeßsystem auch einen Kompressionsgeschwindigkeitsmeßwert liefern. Eine unabhängige oder externe Geschwindigkeitserfassung oder ein Wegmeßsystem sind ebenfalls möglich. Zum Beispiel kann die Geschwindigkeit optisch oder durch geeignete Messaufnehmer oder Sensoren erfaßt werden.

Die Kompression wird üblicherweise durch Kraftausübung einer herkömmlichen geregelten Hydraulik erfolgen, jedoch sind beliebige andere Arten der Krafterzeugung denkbar, sofern sie die erforderlichen Kompressionskräfte zur Verfügung stellen.

Bei einer vorteilhaften Weiterbildung der Erfindung wird nach dem Erfassen des Einsetzens des Fließens die vorgegebene Kompressionskraft oder die vorgegebene Kompressionsgeschwindigkeit eingestellt. Zum Beispiel kann beim Erfassen des Einsetzens des Fließens von einer kraftgesteuerten Kompression auf eine geschwindigkeitsgesteuerte oder weggesteuerte Kompression umgeschaltet werden bzw. umgekehrt. Die nach dem Erfassen des Einsetzen des Fließens des organischen Bindemittels vorgegebene Kompressionskraft oder Kompressionsgeschwindigkeit kann einem beliebigen Verlauf folgen, d.h. zeitlich veränderlich sein. Die Vorgabe kann in Abhängigkeit von erfaßten Meßwerten oder in Form von vorab empirisch ermittelten oder berechneten Werten erfolgen.

Bei einer vorteilhaften Weiterbildung der Erfindung wird nach dem Erfassen des Einsetzens des Fließens eine konstante Geschwindigkeit (V_{G}) vorgegeben. Die Kompression des Reibbelages erfolgt dann geschwindigkeitsgesteuert und ohne Beschränkung oder Steuerung (Vorgabe) der Kompressionskraft. Die konstante Geschwindigkeit (V_{G}) wird so gewählt, daß sie im Gleichgewicht zu der physikalisch/chemisch vorgegebenen Fließgeschwindigkeit des organischen Bindemittels im Belag steht. So bleibt in dieser Kompressionsphase der Kontakt zum Belag erhalten und die Belagstruktur wird nicht gewaltsam komprimiert. Vorzugsweise wird das Einsetzen des Fließens dadurch erfaßt, daß bei Beaufschlagung mit einer vorgegebenen Kraft eine Folge von Messungen der Kompressionsgeschwindigkeit eine konstante Geschwindigkeit anzeigt. Anschließend wird eine konstante Geschwindigkeit (V_{G}) eingestellt, die der beim Einsetzen des Fließens gemessenen konstanten Geschwindigkeit entspricht.

Vorzugsweise wird der Reibbelag in der Zeit vor dem Erfassen des Einsetzens des Fließens des organischen Bindemittels kraftgesteuert mit einer vorgegebenen Kraft komprimiert, wobei eine maximale Kraft nicht überschritten wird. Die kraftgesteuerte Kompression des Reibbelages bis zum Erfassen des Fließens des organischen Bindemittels gewährleistet auch bei ursprünglich unterschiedlichen (streuenden) Eigenschaften der Reibbeläge die Einstellung von gleichen Voraussetzungen zum Zeitpunkt des Einsetzens des Fließens des organischen Bindemittels. Durch die vorgegebene Kompressionskraft werden vorhandene Variationen der Dicke, Dichte, Mischungsstreuungen der Rohstoffe und andere relevante Einflüsse gut ausgeglichen. Sobald das Fließen des organischen Bindemittels durch den Wärmeeintrag in den Reibbelag einsetzt und erfaßt wird, wird die Steuerung der Kompression von der Kraftsteuerung in eine Geschwindigkeitssteuerung bzw. Wegsteuerung umgeschaltet. Diese Umschaltung erfolgt ohne Druckspitzen und ruckfrei.

Vorzugsweise wird ein Einsetzen des Fließens des organischen Bindemittels erfaßt, wenn festgestellt wird, daß beim Komprimieren des Reibbelages mit einer konstanten Kraft die Bewegung der Druckplatte relativ zu der Auflage mit nahezu konstanter Geschwindigkeit erfolgt. Wenn eine Folge von Messungen der Kompressionsgeschwindigkeit zeigt, daß sich die Kompressionsgeschwindigkeit (V_{K}) nahezu nicht mehr ändert, ist dies ein Indiz dafür, daß das Fließen des organischen Bindemittels eingesetzt hat. Sofern z.B. drei aufeinanderfolgende Meßwerte in einem vorgegebenen Geschwindigkeitsintervall liegen, wird davon ausgegangen, daß zum Zeitpunkt der Erfassung des ersten dieser verglichenen und innerhalb des Geschwindigkeitsintervalls liegenden Meßwerte das Fließen des organischen Bindemittels eingesetzt hat. Jedoch sind auch andere Kriterien zur Überprüfung einer konstanten Geschwindigkeit (z.B. Differenzierung, Regression, quadratische Abweichung etc.) möglich.

Vorzugsweise wird ein Ausgangslagepunkt (L_{A}) der Druckplatte relativ zu der Auflage ermittelt, bei dem das Einsetzen des Fließens des organischen Bindemittels stattfindet. An einem derartigen Ausgangslagepunkt kann das Wegmesssystem auf Null gesetzt werden, da an diesem Punkt bestmöglich ausgeglichene Eigenschaften der unterschiedlichen Reibbelag-Rohlinge vorliegen. Dieser Ausgangslagepunkt kann als Bezugsgröße für den weiteren Härteprozess verwendet werden. Vorzugsweise werden die Druckplatte und die Auflage nach dem Einsetzen des Fließens des organischen Bindemittels von dem Ausgangslagepunkt (L_{A}) eine vorgegebene Strecke bis zu einem Lageendpunkt (L_{E}) mit vorgegebener Geschwindigkeit aufeinander zubewegt. Die Auswahl und Vorgabe dieser Strecke erfolgt in Abhängigkeit von der Art des zu härtenden Reibbelages und den Anforderungen an den fertigen Belag, wie z. B. der Kompressibilität. Bis zum Erreichen des Lageendpunktes findet während der Kompression weiterhin ein Fließen des organischen Bindemittels statt.

Vorzugsweise werden die Auflage und die Druckplatte nach dem Erreichen des Lageendpunktes (L_{E}) für einen Zeitraum (T_{H}) in ihrer Relativ-Stellung gehalten. In diesem Zeitraum (T_{H}) erfolgt keine weitere Kompression des Reibbelages, und keine weiteren Stellungsveränderungen der Auflage relativ zu der Druckplatte werden zugelassen. Dies geschieht unabhängig von eventuellem Druckaufbau oder -abfall in dem System durch weiteres Schrumpfen oder weitere Ausdehnung des Belages. Durch das Halten der Auflage und der Druckplatte wird die erforderliche Restaushärtung des organischen Bindemittels gewährleistet. Sobald die Zeitspanne (T_{H}) verstrichen ist, kann der Belag ausgehärtet aus der Vorrichtung entnommen werden.

Vorteilhafte und/oder bevorzugte Weiterbildungen der Erfindung sind in den Unteransprüchen gekennzeichnet. Im folgenden wird die Erfindung anhand eines bevorzugten Ausführungsbeispiels in Zusammenhang mit der beiliegenden Zeichnung näher erläutert. Die Zeichnung zeigt in:

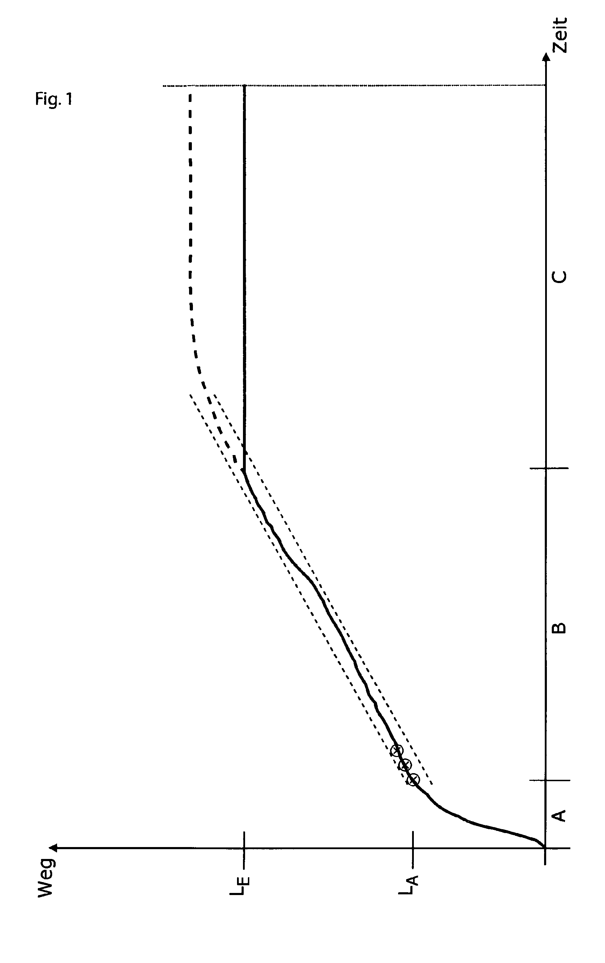

Fig. 1 ein Weg-Zeit-Diagramm mit einer beispielhaften und schematischer Darstellung des Kompressionsweges.

Dem Verfahren wird ein Reibbelag zugeführt, dessen Reibmaterial in einem Preßvorgang auf einer Belagträgerplatte geformt und vorverdichtet wurde. Die Vorrichtung zum Härten des Belages weist zwei heizbare Platten auf. Den Platten ist jeweils eine Heizeinrichtung zugeordnet, so daß die Platten auf unterschiedliche Temperaturen aufgeheizt werden können. Die an der Belagträgerplatte des Reibbelages anliegende Platte wird auf eine Temperatur von etwa 260°C beheizt, während die am Reibmaterial anliegende Platte auf etwa 300°C geheizt wird. Die Heizung der Platten erfolgt durch eine übliche Heizung mit Heizregelung, so daß die Temperatur im Rahmen von Toleranzen gehalten wird.

Der Reibbelag wird zwischen die Platten eingelegt, und eine der Platten wird unter Verwendung einer üblichen Hydraulikvorrichtung mit Hydraulikregelung unter Ausübung einer vorgegebenen Maximalkraft auf die andere feststehende Platte (die Auflage) zubewegt. Während des Kraftaufbaus wird die momentane Kompressionsgeschwindigkeit V_{K} des Reibbelages erfaßt und zwischengespeichert. Der Zeitraum des Kraftaufbaus und der anfänglichen Kompression des Reibbelages ist in Fig. 1 durch den Zeitbereich A dargestellt. In diesem Zeitbereich ändert sich die Geschwindigkeit der Kompression deutlich, was durch den gekrümmten Kurvenverlauf des Weg-Zeit-Diagramms in Fig. 1 wiedergegeben wird.

Während der Kompression findet ein Wärmeeintrag von den Platten in den dazwischen eingeklemmten und komprimierten Reibbelag statt, wodurch die organischen Bindemittel in dem Reibbelag in den fließfähigen Zustand übergehen. Dies äußert sich in einer charakteristischen Änderung der gemessenen Kompressionsgeschwindigkeit V_{K}. Die Geschwindigkeit der Kompression bei vorgegebener Kraft wird (zu Beginn des Bereichs B) nahezu konstant, d.h. die Kurve im Weg-Zeit-Diagramm verläuft nahezu linear. Durch eine mit der Geschwindigkeitserfassung gekoppelte Logik werden die jeweils letzten drei Meßwerte der Kompressionsgeschwindigkeit V_{K} miteinander verglichen. Dabei wird ermittelt, ob alle drei Werte in einem vorgegebenen Geschwindigkeitsbereich liegen, also ob der Weg-Zeit-Verlauf ausreichend linear ist. Sofern dies der Fall ist, wird die Lage der Druckplatte zum Zeitpunkt der Messung des ersten von diesen drei Vergleichswerten als Ausgangslagepunkt L_{A} der Druckplatte definiert und gespeichert. Von diesem Ausgangslagepunkt L_{A} aus wird ein Lageendpunkt L_{E} berechnet, wobei die Kompression von L_{A} bis L_{E} einer vorgewählten "Fließstrecke" des organischen Bindemittels bzw. Kompressionsstrecke des Reibbelages entspricht. Diese Strecke wird in Abhängigkeit von der zu erzielenden Kompressibilität und den Eigenschaften des ursprünglichen Reibbelages oder anderen Vorgaben ermittelt. Sobald erfaßt wird, daß das Fließen des organischen Bindemittels eingesetzt hat, wird das kraftgeregelte Komprimieren des Reibbelages in ein weg- bzw. geschwindigkeitsgeregeltes Komprimieren umgeschaltet. Dies erfolgt ohne Kraftspitzen und ohne die Kompressionsgeschwindigkeit deutlich zu ändern. Die Druckplatte wird geschwindigkeits- bzw. weggesteuert verfahren, wobei der Kompressionsdruck zwar erfaßt, jedoch nicht gesteuert wird. Der Zeitbereich vom Erkennen der nahezu konstanten Kompressionsgeschwindigkeit bis zum Ende der weggesteuerten Kompression des Reibbelages ist in Fig. 1 durch den Buchstaben B gekennzeichnet.

Sobald die Druckplatte den berechneten und vorgegebenen Lageendpunkt L_{E} erreicht hat, wird die relative Stellung der Platten zueinander nicht weiter verändert. Das System wird gleichsam "eingefroren", d. h. eine entsprechende Lageregelung läßt keine weitere Veränderung der Stellung der Platten zu. Dies geschieht unabhängig von eventuellem Druckaufbau oder Druckabfall durch weiteres Schrumpfen oder Ausdehnen des Belages. Die Platten werden für einen Zeitraum T_{H} in dieser relativen Stellung zueinander gehalten, um eine Restaushärtung des organischen Bindemittels in dem Reibbelag zu gewährleisten. Dieser Zeitraum ist in Fig. 1 durch den Buchstaben C gekennzeichnet.

Es ist zu beachten, daß der Lageendpunkt L_{E} derart gewählt wird, daß nicht der theoretisch mögliche volle Fließbereich des organischen Bindemittels ausgenutzt wird (beispielhaft in Fig. 1 durch eine gebrochene Linie dargestellt). Dadurch wird eine gewünschte verbleibende Kompressibilität des Reibbelages erzielt.

Im Rahmen des Erfindungsgedankens sind durchaus Abwandlungen möglich. So ist die Verwendung unterschiedlicher Reibbeläge mit oder ohne Belagträgerplatte denkbar. Das Reibmaterial muß lediglich ein Bindemittel enthalten, das bei ausreichendem Wärmeeintrag fließfähig wird. Auch bei der Meßwerterfassung und Regelung sind Abwandlungen möglich. Es ist lediglich erforderlich, daß das Einsetzen des Fließens durch eine charakteristische Änderung der Meßwerte erfaßt wird und die Kompression des Reibbelages in Abhängigkeit von dem Erfassen des Fließens erfolgt. Es ist z. B. denkbar, daß die Härtedauer oder -temperatur in Abhängigkeit vom Einsetzen des Fließens gesteuert wird.

Im übrigen ist anzumerken, daß die in dieser Beschreibung verwendeten Begriffe "Kraft" und "Kraftmessung" sinngemäß den Druck bzw. eine Druckmessung einschließen.

## Patentansprüche

1. Verfahren zum Härten eines organisch gebundenen Reibbelages mit Hilfe einer Vorrichtung, die eine Auflage für den Reibbelag, eine Druckplatte und eine Heizeinrichtug zum Beheizen der Auflage und/oder der Druckplatte aufweist,
wobei der Reibbelag zwischen der Auflage und der Druckplatte eingebracht wird und die Auflage und die Druckplatte derart aufeinander zubewegt werden, daß der Reibbelag dazwischen eingespannt und mit einer vorgegebenen Kraft oder einer vorgegebenen Geschwindigkeit komprimiert wird, wobei beim Komprimieren eine Kompressionsgeschwindigkeit (V_{K}) bzw. eine Kompressionskraft (P_{K}) der Auflage und/oder der Druckplatte gemessen werden,
wobei aus der gemessenen Kompressionsgeschwindigkeit (V_{K}) oder der gemessenen Kompressionskraft (P_{K}) ein Einsetzen des Fließens des organischen Bindemittels erfaßt wird,
wobei der Reibbelag in Abhängigkeit von dem Erfassen des Einsetzens des Fließens komprimiert wird.

2. Verfahren nach Anspruch 1,
**dadurch gekennzeichnet,**
**daß** nach Erfassen des Einsetzens des Fließens die vorgegebene Kompressionskraft oder die vorgegebene Kompressionsgeschwindigkeit eingestellt wird.

3. Verfahren nach Anspruch 2,
**dadurch gekennzeichnet,**
**daß** nach Erfassen des Einsetzens des Fließens eine konstante Geschwindigkeit (V_{G}) als vorgegebene Geschwindigkeit eingestellt wird.

4. Verfahren nach Anspruch 3,
**dadurch gekennzeichnet,**
**daß** der Reibbelag vor dem Erfassen des Einsetzens des Fließens des organischen Bindemittels unter Kraftsteuerung mit einer vorgegebenen Kraft komprimiert wird, wobei eine maximale Kraft nicht überschritten wird.

5. Verfahren nach einem der Ansprüche 1 bis 4,
**dadurch gekennzeichnet,**
**daß** ein Einsetzen des Fließens des organischen Bindemittels erfaßt wird, wenn festgestellt wird, daß beim Komprimieren des Reibbelages mit einer konstanten Kraft die Bewegung der Druckplatte relativ zu der Auflage mit nahezu konstanter Geschwindigkeit erfolgt.

6. Verfahren nach einem der Ansprüche 2 bis 5,
**dadurch gekennzeichnet,**
**daß** ein Ausgangslagepunkt (L_{A}) der Druckplatte relativ zu der Auflage ermittelt wird, bei dem das Einsetzen des Fließens des organischen Bindemittels stattfindet.

7. Verfahren nach Anspruch 6,
**dadurch gekennzeichnet,**
**daß** die Druckplatte und die Auflage nach dem Einsetzen des Fließens des organischen Bindemittels von dem Ausgangslagepunkt (L_{A}) eine vorgegebene Strecke bis zu einem Lageendpunkt (L_{E}) mit vorgegebener Geschwindigkeit aufeinander zubewegt werden.

8. Verfahren nach Anspruch 7,
**dadurch gekennzeichnet,**
**daß** die Auflage und die Druckplatte nach Erreichen des Lageendpunktes (L_{E}) für einen Zeitraum (T_{H}) in ihrer Relativ-Stellung gehalten werden.
